# EUROPEAN PATENT APPLICATION

(11) **EP 3 785 844 A1**
(43) Date of publication of application: **03.03.2021**
(21) Application number: 20192638.3
(22) Date of filing: 25.08.2020
(51) Int. Cl.: B23K 35/02, B23K 35/28, B32B 15/01, C22C 21/02, C22C 21/06, C22C 21/10, C22F 1/047, C22F 1/053

(54) **ALUMINUM ALLOY MATERIAL, FLUXLESS BRAZED STRUCTURE, AND FLUXLESS BRAZING METHOD**

(30) Priority: 29.08.2019 JP 2019156564
(71) Applicant: Kabushiki Kaisha Kobe Seiko Sho (Kobe Steel, Ltd.), Kobe-shi, Hyogo 651-8585 (JP)
(72) Inventor: MATSUKADO, KATSUHIRO, Moka-shi,, Tochigi 321-4367 (JP); SHIBUYA, YUJI, Moka-shi,, Tochigi 321-4367 (JP); TSURUNO, AKIHIRO, Moka-shi,, Tochigi 321-4367 (JP); SUGIMOTO, NAOKI, Kariya-city,, Aichi 448-8661 (JP); HONMA, NOBUHIRO, Kariya-city,, Aichi 448-8661 (JP); YAMADA, SHOGO, Kariya-city,, Aichi 448-8661 (JP); TOYAMA, TAKETOSHI, Kariya-city,, Aichi 448-8661 (JP)
(74) Representative: Müller-Boré & Partner Patentanwälte PartG mbB

(57) **Abstract**

Provided are, in a fluxless brazing method using a Mg-free brazing material, an aluminum alloy material, a fluxless brazed structure, and a fluxless brazing method each having an excellent brazability. An aluminum alloy material is brazed, to a brazing sheet in which a core material is clad with a brazing material made of an Al-Si-based alloy having a Mg content restricted to be less than 0.10 mass%, with the brazing material without using a flux. The aluminum alloy material is made of any of an Al-Mg-based alloy containing 0.40 mass% or more and 1.30 mass% or less of Mg, an Al-Mn-based alloy, and an Al-Zn-based alloy.

## Description

### TECHNICAL FIELD

The present disclosure relates to an aluminum alloy material, a fluxless brazed structure, and a fluxless brazing method.

### BACKGROUND ART

A heat exchanger to be mounted in an automobile is manufactured by forming a brazing sheet made of an aluminum alloy into a predetermined shape and subjecting the formed brazing sheet to assembly and brazing. In recent years, development of a fluxless brazing method using a brazing material to which Mg is added has been advanced. Fluxless brazing refers to brazing performed using a brazing material without using a flux.

For example, Japanese Patent No. 6,405,020 (Patent Document 1) below discloses a fluxless brazing method for an aluminum material in which Mg is added to a brazing material to destroy an oxide coating film and an aluminum alloy member for fluxless brazing.

### SUMMARY OF THE INVENTION

However, in the fluxless brazing method described in Patent Document 1 mentioned above, Mg contained in the brazing material degrades a corrosion resistance of a member. For example, when a hole is opened in a tube formed of a brazing sheet due to a degraded corrosion resistance of the tube, a fluid inside the tube may leak out. Meanwhile, in a fluxless brazing method using a Mg-free brazing material, an oxide coating film cannot be destroyed, resulting in a degraded brazability.

It is therefore an object of the present invention to provide, in a fluxless brazing method using a Mg-free brazing material, an aluminum alloy material, a fluxless brazed structure, and a fluxless brazing method each having an excellent brazability.

An aluminum alloy material according to the present invention is an aluminum alloy material to be brazed, to a brazing sheet in which a core material is clad with a brazing material made of an Al-Si-based alloy having a Mg content restricted to be less than 0.10 mass%, with the brazing material without using a flux. The aluminum alloy material is made of any of an Al-Mg-based alloy containing 0.40 mass% or more and 1.30 mass% or less of Mg, an Al-Mn-based alloy, and an Al-Zn-based alloy.

A fluxless brazed structure according to the present invention includes a brazing sheet in which a core material is clad with a brazing material made of an Al-Si-based alloy having a Mg content restricted to be less than 0.10 mass% and an aluminum alloy material made of any of an Al-Mg-based alloy containing 0.40 mass% or more and 1.30 mass% or less of Mg, an Al-Mn-based alloy, and an Al-Zn-based alloy.

A fluxless brazing method according to the present invention includes brazing, to a brazing sheet in which a core material is clad with a brazing material made of an Al-Si-based alloy having a Mg content restricted to be less than 0.10 mass%, an aluminum alloy material made of any of an Al-Mg-based alloy containing 0.40 mass% or more and 1.30 mass% or less of Mg, an Al-Mn-based alloy, and an Al-Zn-based alloy with the brazing material without using a flux.

In a fluxless brazing method using a Mg-free brazing material, each of the aluminum alloy material, the fluxless brazed structure, and the brazing method according to the present invention has an excellent brazability.

### BRIEF DESCRIPTION OF DRAWINGS

FIG. 1 is a perspective view of a fluxless brazed structure according to an embodiment of the present invention;
FIG. 2A is a plan view of a test piece for brazability evaluation used in the embodiment; and
FIG. 2B is a cross-sectional view corresponding to a line IIB-IIB in FIG. 2A.

### DESCRIPTION OF EMBODIMENTS

Referring appropriately to the drawings, the following will describe a mode (embodiment) for carrying out the present invention.

### [Aluminum Alloy Material]

An aluminum alloy material according to the present embodiment is to be brazed, to a brazing sheet in which a core material is clad with a brazing material made of an Al-Si-based alloy having a Mg content restricted to be less than 0.10 mass%, with the brazing material without using a flux.

The aluminum alloy material is made of any of an Al-Mg-based alloy containing 0.40 mass% or more and 1.30 mass% or less of Mg, an Al-Mn-based alloy, and an Al-Zn-based alloy.

In the present embodiment, through respective portions of the aluminum alloy material and the brazing material of the brazing sheet which are in contact with each other, Mg migrates from the aluminum alloy material into the brazing material to destroy an oxide coating film on a surface of the brazing material. In other words, a content of Mg which degrades a corrosion resistance in the brazing material can be reduced to a minimum required amount. This allows brazing to be performed using a combination of the brazing material not containing Mg or containing a reduced amount of Mg and a Mg-containing member (bare material). The aluminum alloy material according to the present embodiment enables fluxless brazing to be performed using a conventional brazing sheet for Nocolok brazing in which Mg is not added to a brazing material or a reduced amount of Mg is added to the brazing material. Particularly when the brazing sheet is used as a tube material for allowing a coolant of a heat exchanger to flow therethrough and the aluminum alloy material is used as a fin material, the brazing sheet is required to have a corrosion resistance higher than that required of the fin material. Specifically, a Mg content of the brazing material of the brazing sheet required to have the corrosion resistance is reduced to zero or to a smaller amount, while Mg is added to the aluminum alloy material (bare material not having a brazing material) required to have a corrosion resistance lower than that required of the brazing sheet, to thus enable brazing to be performed. As a result, it is possible to improve a brazability of the aluminum alloy material to the brazing sheet. In addition, it is possible to improve a corrosion resistance of a fluxless brazed structure including the brazing sheet and the aluminum alloy material.

The aluminum alloy material may further contain a predetermined amount of Bi. By containing the predetermined amount of Bi, the aluminum alloy material has a further improved brazability.

The aluminum alloy material may further contain a predetermined amount of one or more of Zn, In, Sn Cu, Ni, Mn, Si, Fe, Ti, Cr, and Zr.

The following will describe a reason for limiting each of the components. Note that a content of each of the components corresponds to an amount of the component contained in the entire aluminum alloy material.

The aluminum alloy material is made of any of an Al-Mg-based alloy, an Al-Mn-based alloy, and an Al-Zn-based alloy. Note that an Al-XX-based alloy means an alloy having an XX content which is highest next to an Al content. For example, the Al-Mg-based alloy has an Mg content which is highest next to an Al content. Preferably, the Al-XX-based alloy contains 93 mass% or more of Al.

For example, the Al-Mg-based alloy contains 0.40 mass% or more and 1.30 mass% or less of Mg, with the remainder being Al and inevitable impurities. The Al-Mg alloy may further contain one or more of Bi, Zn, In, Sn, Cu, Ni, Mn, Si, Fe, Ti, Cr, and Zr a content of which is lower than a content of Mg.

For example, the Al-Mn-based alloy contains 0.40 mass% or more and 1.30 mass% or less of Mg and 0.40 mass% or more and 1.80 mass% or less of Mn, with the remainder being Al and inevitable impurities. The Al-Mn-based alloy may further contain one or more of Bi, Zn, In, Sn, Cu, Ni, Si, Fe, Ti, Cr, and Zr a content of which is lower than a content of Mn.

For example, the Al-Zn-based alloy contains 0.40 mass% or more and 1.30 mass% or less of Mg and 0.80 mass% or more and 9.00 mass% or less of Zn, with the remainder being Al and inevitable impurities. The Al-Zn-based alloy may further contain one or more of Bi, In, Sn, Cu, Ni, Mn, Si, Fe, Ti, Cr, and Zr a content of which is lower than a content of Zn.

The following will describe specific components of the aluminum alloy material.

### (Mg Content: 0.40 Mass% or More and 1.30 Mass% or Less)

Mg has an effect of accelerating destruction of an oxide coating film and also has an effect of increasing a strength of the aluminum alloy material by age hardening when contained therein in coexistence with Si. When a Mg content is less than 0.40 mass%, a sufficient brazability cannot be ensured. Meanwhile, when the Mg content exceeds 1.30 mass%, a workability of the aluminum alloy material deteriorates to result in a crack in cold rolling.

Accordingly, the Mg content is 0.40 mass% or more and 1.30 mass% or less.

In terms of causing Mg to sufficiently achieve the effect described above, the Mg content is preferably 0.45 mass% or more, and more preferably 0.50 mass% or more, 0.55 mass% or more, 0.60 mass% or more, 0.70 mass% or more, and 0.80 mass% or more. In terms of improving the workability, the Mg content is preferably 1.20 mass% or less, and more preferably 1.15 mass% or less, 1.10 mass% or less, 1.00 mass% or less, and 0.90 mass% or less.

### (Bi Content: 1.00 Mass% or Less)

Bi has an effect of inhibiting reproduction of an oxide coating film after destruction of the oxide coating film. However, when a Bi content exceeds 1.00 mass%, the workability deteriorates to result in a crack in cold rolling.

Accordingly, the Bi content is 1.00 mass% or less (including 0 mass%).

In terms of causing Bi to sufficiently achieve the effect described above, the Bi content is preferably 0.01 mass% or more, and more preferably 0.05 mass% or more, 0.10 mass% or more, 0.15 mass% or more, 0.17 mass% or more, and 0.20 mass% or more. In terms of improving the workability, the Bi content is preferably 0.50 mass% or less, and more preferably 0.45 mass% or less, 0.40 mass% or less, 0.35 mass% or less, and 0.30 mass% or less.

### (Zn Content: 0.80 Mass% or More and 9.00 Mass% or Less)

Zn is an alloy element which lowers a potential of the aluminum alloy material. Accordingly, when added to the aluminum alloy material, Zn functions as a sacrificial anode material to allow a sacrificial corrosion resistant effect to be obtained. When a Zn content is 0.80 mass% or more, it is possible to further improve the effect described above. Meanwhile, when the Zn content exceeds 9.00 mass%, the workability deteriorates to result in a crack in cold rolling.

Accordingly, the Zn content is 0.80 mass% or more and 9.00 mass% or less.

The Zn content may also be less than 0.80 mass% (including 0 mass%) but, as described above, the Zn content is preferably 0.80 mass% or more. In terms of causing Zn to sufficiently achieve the effect described above, the Zn content is more preferably 0.90 mass% or more, and most preferably 1.00 mass% or more, 1.10 mass% or more, 1.20 mass% or more, 1.25 mass% or more, and 1.50 mass% or more. In terms of improving the workability, the Zn content is preferably 5.00 mass% or less, and more preferably 4.00 mass% or less, 3.00 mass% or less, and 2.00 mass% or less.

### (In Content: 0.05 Mass% or Less, Sn Content: 0.05 Mass% or Less)

Similarly to Zn, each of In and Sn is an alloy element which lowers the potential of the aluminum alloy material. Therefore, when added to the aluminum alloy material, each of In and Sn functions as the sacrificial anode material to allow the sacrificial corrosion resistant effect to be obtained. However, when each of an In content and a Sn content exceeds 0.05 mass%, the workability deteriorates to result in a crack in cold rolling.

Accordingly, each of the In content and the Sn content is 0.05 mass% or less (including 0 mass%).

In terms of causing each of In and Sn to sufficiently achieve the effect described above, each of the In content and the Sn content is preferably 0.01 mass% or more, and more preferably 0.02 mass% or more. In terms of improving the workability, each of the In content and the Sn content is preferably 0.04 mass% or less, and more preferably 0.03 mass% or less.

### (Cu Content: 0.10 Mass% or More and 1.50 Mass% or Less)

Cu has an effect of improving a tensile strength of the aluminum alloy material by being solid-dissolved therein. When a Cu content is 0.10 mass% or more, it is possible to further improve the effect described above. Meanwhile, when the Cu content exceeds 1.50 mass%, burning (local melting which occurs in a core material alloy during brazing due to a local increase in alloy element concentration resulting from migration of Si from a brazing material or the like) may possibly occur.

Accordingly, the Cu content is 0.10 mass% or more and 1.50 mass% or less.

The Cu content may also be less than 0.10 mass% (including 0 mass%) but, as described above, the Cu content is preferably 0.10 mass% or more. In terms of causing Cu to sufficiently achieve the effect described above, the Cu content is more preferably 0.11 mass% or more, and most preferably 0.12 mass% or more, 0.13 mass% or more, 0.25 mass% or more, and 0.50 mass% or more. In terms of preventing occurrence of the burning, the Cu content is preferably 1.40 mass% or less, and more preferably 1.30 mass% or less, 1.20 mass% or less, 1.00 mass% or less, and 0.90 mass% or less.

### (Ni Content: 0.10 Mass% or More and 0.50 mass% or less)

Ni has an effect of forming an Al-Ni-based intermetallic compound in the aluminum alloy material and improving the tensile strength. When an Ni content is 0.10 mass% or more, it is possible to further improve the effect described above. Meanwhile, when the Ni content exceeds 0.50 mass%, the coarse Al-Ni-based intermetallic compound is formed to degrade the workability and result in a crack in cold rolling.

Accordingly, the Ni content is 0.10 mass% or more and 0.50 mass% or less.

The Ni content may also be less than 0.10 mass% (including 0 mass%) but, as described above, the Ni content is preferably 0.10 mass% or more. In terms of causing Ni to sufficiently achieve the effect described above, the Ni content is more preferably 0.12 mass% or more, and most preferably 0.15 mass% or more, 0.17 mass% or more, 0.20 mass% or more, and 0.25 mass% or more. In terms of improving the workability, the Ni content is preferably 0.45 mass% or less, and more preferably 0.43 mass% or less, 0.40 mass% or less, 0.35 mass% or less, and 0.30 mass% or less.

### (Mn Content: 0.10 Mass% or More and 1.80 Mass% or Less)

Mn has an effect of improving the tensile strength of the aluminum alloy material by being solid-dissolved therein. Mn also has an effect of forming a precipitate of an Al-Si-Mn alloy or the like and improving the tensile strength of the aluminum alloy material when contained therein in coexistence with Si. When the Mn content is 0.10 mass% or more, it is possible to further improve the effect described above. Meanwhile, when the Mn content exceeds 1.80 mass%, the coarse Al-Mn-Si-based intermetallic compound and a coarse Al-Mn-based intermetallic compound are formed to degrade the workability and result in a crack in cold rolling.

Accordingly, the Mn content is 0.10 mass% or more and 1.80 mass% or less.

The Mn content may also be less than 0.10 mass% but, as described above, the Mn content is preferably 0.10 mass% or more. In terms of causing Mn to sufficiently achieve the effect described above, the Mn content is more preferably 0.20 mass% or more, and most preferably 0.30 mass% or more, 0.40 mass% or more, 0.50 mass% or more, and 0.60 mass% or more. In terms of improving the workability, the Mn content is preferably 1.70 mass% or less, and more preferably 1.50 mass% or less, 1.40 mass% or less, 1.20 mass% or less, and 1.00 mass% or less.

### (Si Content: 0.10 Mass% or More and 1.50 Mass% or Less)

Si has an effect of improving the tensile strength of the aluminum alloy material by being solid-dissolved therein. Si also has an effect of forming an Al-Mn-Si-based intermetallic compound and an Al-Fe-Si-based intermetallic compound and improving the strength of the aluminum alloy material after brazing when contained therein in coexistence with Mn and Fe. When a Si content is 0.10 mass% or more, it is possible to further improve the effect described above. Meanwhile, when the Si content exceeds 1.50 mass%, a melting point of the aluminum alloy material decreases and a low melting point phase increases to cause melting of the aluminum alloy material.

Accordingly, the Si content is 0.10 mass% or more and 1.50 mass% or less.

The Si content may also be less than 0.10 mass% (including 0 mass%) but, as described above, the Si content is preferably 0.10 mass% or more. In terms of causing Si to sufficiently achieve the effect described above, the Si content is more preferably 0.12 mass% or more, and most preferably 0.15 mass% or more, 0.17 mass% or more, 0.20 mass% or more, and 0.25 mass% or more. In terms of preventing the aluminum alloy material from being melted, the Si content is preferably 1.30 mass% or less, or more preferably 1.20 mass% or less, 1.00 mass% or less, 0.60 mass% or less, and 0.50 mass% or less.

### (Fe Content: 0.05 Mass% or More and 0.50 Mass% or Less)

Fe has an effect of improving the tensile strength of the aluminum alloy material by being solid-dissolved therein. Fe also has an effect of forming an Al-Si-Fe-based intermetallic compound and an Al-Fe-based intermetallic compound and further improving the strength after brazing. When a Fe content is 0.05 mass% or more, it is possible to further improve the effect described above. Meanwhile, when the Fe content exceeds 0.50 mass%, the coarse Al-Si-Fe-based intermetallic compound and the coarse Al-Fe-based intermetallic compound are formed to degrade the corrosion resistance.

Accordingly, the Fe content is 0.05 mass% or more and 0.50 mass% or less.

The Fe content may also be less than 0.05 mass% (including 0 mass%) but, as described above, the Fe content is preferably 0.05 mass% or more. In terms of causing Fe to sufficiently achieve the effect described above, the Fe content is more preferably 0.07 mass% or more, and most preferably 0.08 mass% or more, 0.09 mass% or more, and 0.10 mass% or more. In terms of improving the corrosion resistance, the Fe content is preferably 0.40 mass% or less, and more preferably 0.35 mass% or less, 0.30 mass% or less, 0.20 mass% or less, 0.15 mass% or less, and 0.12 mass% or less.

### (Ti Content: 0.01 Mass% or More and 0.35 Mass% or Less)

Ti has an effect of forming an Al-Ti-based intermetallic compound in the aluminum alloy material and improving the tensile strength thereof. When a Ti content is 0.01 mass% or more, it is possible to further improve the effect described above. Meanwhile, when the Ti content exceeds 0.35 mass%, the coarse Al-Ti-based intermetallic compound is formed to degrade the workability and result in a crack in cold rolling.

Accordingly, the Ti content is 0.01 mass% or more and 0.35 mass% or less.

The Ti content may also be less than 0.01 mass% (including 0 mass%) but, as described above, the Ti content is preferably 0.01 mass% or more. In terms of causing Ti to sufficiently achieve the effect described above, the Ti content is more preferably 0.02 mass% or more, and most preferably 0.03 mass% or more. In terms of improving the workability, the Ti content is preferably 0.30 mass% or less, and more preferably 0.25 mass% or less, 0.20 mass% or less, 0.10 mass% or less, and 0.05 mass% or less.

### (Cr Content: 0.30 Mass% or Less)

Cr has an effect of improving the strength of the aluminum alloy material by being solid-dissolved therein. Cr also has an effect of precipitating an Al-Cr-based intermetallic compound and thus coarsening crystal particles after heating. As a result, during brazing, the aluminum alloy material is less likely to be deformed. When a Cr content exceeds 0.30 mass%, the coarse Al-Cr-based intermetallic compound is formed to degrade the workability and result in a crack in cold rolling.

Accordingly, the Cr content is 0.30 mass% or less (including 0 mass%).

In terms of causing Cr to sufficiently achieve the effect described above, the Cr content is preferably 0.01 mass% or more, and more preferably 0.02 mass% or more, 0.03 mass% or more, 0.05 mass% or more, and 0.10 mass% or more. In terms of improving the workability, the Cr content is preferably 0.27 mass% or less, and more preferably 0.25 mass% or less, 0.20 mass% or less, 0.17 mass% or less, and 0.15 mass% or less.

### (Zr Content: 0.30 Mass% or Less)

Zr has an effect of precipitating as an Al-Zr-based intermetallic compound and improving the strength of the aluminum alloy material after joining thereof by dispersion strengthening. The Al-Zn-based intermetallic compound functions to coarsen the crystal particles during the heating. When a Zr content exceeds 0.30 mass%, the coarse Al-Zr-based intermetallic compound is formed to degrade the workability and result in a crack in cold rolling.

Accordingly, the Zr content is 0.30 mass% or less (including 0 mass%).

In terms of causing Zr to sufficiently achieve the effect described above, the Zr content is preferably 0.01 mass% or more, and more preferably 0.02 mass% or more, 0.03 mass% or more, 0.05 mass% or more, and 0.10 mass% or more. In terms of improving the workability, the Zr content is preferably 0.27 mass% or less, and more preferably 0.25 mass% or less, 0.20 mass% or less, 0.17 mass% or less, and 0.15 mass% or less.

### (Remainder: Al and Inevitable Impurities)

A basic chemical composition forming the aluminum alloy material according to the present embodiment is as described above, and the remainder is Al and inevitable impurities. The inevitable impurities are impurities inevitably mixed in the aluminum alloy material when raw materials are melted and contained in the aluminum alloy material within ranges which do not inhibit various properties of the aluminum alloy material. Examples of the inevitable impurities include V, Na, Sr, and the like.

These inevitable impurities do not inhibit the effects of the present invention when a content of each of the inevitable impurities is 0.05 mass% or less and a total content of the inevitable impurities is 0.50 mass% or less. Accordingly, in the present invention, it may also be possible to allow the aluminum alloy material to contain the inevitable impurities within ranges which do not inhibit the effects of the present invention. Even when the inevitable impurities are positively added to the aluminum alloy material within the ranges which do not inhibit the effects of the present invention, the added inevitable impurities do not inhibit the effects of the present invention. In other words, such modes are also included in a technical scope of the present invention.

Note that Bi, Zn, In, Sn, Cu, Ni, Mn, Si, Fe, Ti, Cr, and Zr each mentioned above may also be contained as the inevitable impurities in the aluminum alloy material. In this case, for example, the content of each of the inevitable impurities is 0.1 mass% or less and the total content of the inevitable impurities is 0.3 mass% or less.

As an example of the embodiment of the present invention, it can be considered to subject an aluminum alloy material to fluxless brazing/joining to a brazing sheet including an Al-Si-based brazing material. It is also possible to clad, on a side of the aluminum alloy material not to be subjected to the joining, a sacrificial anode material (e.g., an Al-Zn-based alloy) and a brazing material (e.g., a conventional Al-Si-based brazing material or a brazing material for fluxless brazing caused to contain Mg, Bi, or the like). It is also possible to provide the aluminum alloy material as a thin bare fin (single-layer material).

### [Brazing Sheet]

Next, a description will be given of a brazing sheet to which the aluminum alloy material is to be brazed.

The brazing sheet is obtained by, e.g., cladding at least one surface of a core material with a brazing material.

### (Core Material)

The core material of the brazing sheet according to the present embodiment is not particularly restricted.

For example, as the core material of the brazing sheet according to the present embodiment, a core material made of an aluminum alloy containing a predetermined element can be used. As such an aluminum alloy, an Al-Cu-based alloy, an Al-Mn-based alloy, an Al-Mg-based alloy, an Al-Mg-Si-based alloy, or the like can be used.

### <Brazing Material>

The brazing material is made of an Al-Si-based alloy having a Mg content restricted to be 0.10 mass% or less. As the Al-Si-based alloy, an Al-Si-based alloy having a Si content in a range of, e.g., 5.00 mass% or more and 12.00 mass% or less can be used. However, the Si content is not limited to this range. The brazing material may also be made of an Al-Si-Zn-based alloy containing a predetermined amount of Zn. The brazing material may also contain another element. For example, the brazing material may also contain a predetermined amount of In, Sn, Fe, or the like. The following will describe individual components of the brazing material. Note that a content of each of the components corresponds to an amount of the component contained in the entire brazing material.

### (Mg Content: Less than 0.10 Mass%)

Mg is an alloy element which degrades a corrosion resistance of the brazing material. When a Mg content is 0.10 mass% or more, the corrosion resistance of a brazed structure deteriorates.

Accordingly, the Mg content is less than 0.10 mass% (including 0 mass%). In terms of improving the corrosion resistance, the Mg content is preferably 0.07 mass% or less, more preferably 0.05 mass% or less, 0.03 mass% or less, 0.02 mass% or less, and 0.01 mass% or less, and most preferably 0 mass%.

### (Si Content: 5.00 Mass% or More and 12.00 Mass% or Less)

Si is an alloy element which lowers a solidus temperature of an aluminum alloy (i.e., melts an aluminum alloy at a low temperature). As a Si amount increases, a ratio of an amount of the molten brazing material increases. When the Si content is 5.00 mass% or more, it is possible to ensure a sufficient amount of the brazing material. Meanwhile, when the Si content is 12.00 mass% or less, occurrence of local melting of the brazing material or the like is inhibited and erosion by the molten brazing material is also inhibited.

Accordingly, the Si content is preferably 5.00 mass% or more and 12.00 mass% or less.

The Si content may also be less than 5.00 mass% but, as described above, the Si content is preferably 5.00 mass% or more. In terms of causing Si to sufficiently achieve the effect described above, the Si content is more preferably 6.00 mass% or more, and most preferably 7.00 mass% or more, 8.00 mass% or more, and 9.00 mass% or more. In terms of inhibiting the occurrence of the local melting or the like and the erosion by the molten brazing material, the Si content is more preferably 11.00 mass% or less, and most preferably 10.00 mass% or less.

### (Zn Content: 1.00 Mass% or More and 9.00 Mass% or Less)

Zn is an alloy element which lowers a potential of an aluminum alloy. Accordingly, when added to the brazing material, Zn functions as the sacrificial anode material to allow the sacrificial corrosion resistant effect to be obtained. When a Zn content is 1.00 mass% or more, it is possible to further improve the effect described above. Meanwhile, when the Zn content exceeds 9.00 mass%, a workability of the brazing material deteriorates to result in a crack in cold rolling.

Accordingly, the Zn content is 1.00 mass% or more and 9.00 mass% or less.

The Zn content may also be less than 1.00 mass% (including 0 mass%) but, as described above, the Zn content is preferably 1.00 mass% or more. In terms of causing Zn to sufficiently achieve the effect described above, the Zn content is more preferably 2.00 mass% or more, and most preferably 3.00 mass% or more, 4.00 mass% or more, and 5.00 mass% or more. In terms of improving the workability, the Zn content is preferably 8.00 mass% or less, and more preferably 7.00 mass% or less and 6.00 mass% or less.

### (In Content: 0.05 Mass% or More and 0.05 Mass% or Less)

Similarly to Zn, each of In and Sn is an alloy element which lowers the potential of the aluminum alloy. Accordingly, when added to the brazing material, each of In and Sn functions as the sacrificial anode material to allow the sacrificial corrosion resistant effect to be obtained. However, when each of an In content and a Sn content exceeds 0.05 mass%, the workability deteriorates to result in a crack in cold rolling.

Accordingly, each of the In content and the Sn content is 0.05 mass% or less (including 0 mass%).

In terms of causing each of In and Sn to sufficiently achieve the effect described above, each of the In content and the Sn content is preferably 0.01 mass% or more, and more preferably 0.02 mass% or more. In terms of improving the workability, each of the In content and the Sn content is preferably 0.04 mass% or less, and more preferably 0.03 mass% or less.

### (Fe Content: 0.05 Mass% or More and 0.50 Mass% or Less)

Fe has an effect of improving a tensile strength of the brazing material by being solid-dissolved therein. Fe also has an effect of forming an Al-Si-Fe-based intermetallic compound and an Al-Fe-based intermetallic compound and further improving a strength of the brazing material after brazing. When a Fe content is 0.05 mass% or more, it is possible to further improve the effect described above. Meanwhile, when the Fe content exceeds 0.50 mass%, the coarse Al-Si-Fe-based intermetallic compound and the coarse Al-Fe-based intermetallic compound are formed to degrade the corrosion resistance.

Accordingly, the Fe content is 0.05 mass% or more and 0.50 mass% or less.

The Fe content may also be less than 0.05 mass% (including 0 mass%) but, as described above, the Fe content is preferably 0.05 mass% or more. In terms of causing Fe to sufficiently achieve the effect described above, the Fe content is more preferably 0.07 mass% or more, and most preferably 0.08 mass% or more, 0.09 mass% or more, and 0.10 mass% or more. In terms of improving the corrosion resistance, the Fe content is preferably 0.40 mass% or less, and more preferably 0.35 mass% or less, 0.30 mass% or less, 0.20 mass% or less, 0.15 mass% or less, and 0.12 mass% or less.

### (Remainder: Al and Inevitable Impurities)

A basic chemical composition forming the brazing material according to the present embodiment is as described above, and the remainder is Al and inevitable impurities. The inevitable impurities are impurities inevitably mixed in the brazing material when raw materials are melted and contained in the brazing material within ranges which do not inhibit various properties of the brazing material. Examples of the inevitable impurities include V, Na, Sr, and the like.

These inevitable impurities do not inhibit the effects of the present invention when a content of each of the inevitable impurities is 0.05 mass% or less and a total content of the inevitable impurities is 0.50 mass% or less. Accordingly, in the present invention, it may also be possible to allow the brazing material to contain the inevitable impurities within ranges which do not inhibit the effects of the present invention. Even when the inevitable impurities are positively added to the brazing material within the ranges which do not inhibit the effects of the present invention, the added inevitable impurities do not inhibit the effects of the present invention. In other words, such modes are also included in the technical scope of the present invention.

Note that Si, Zn, In, Sn, and Fe each mentioned above may also be contained as the inevitable impurities in the brazing material. In this case, for example, the content of each of the inevitable impurities is 0.1 mass% or less and a total content of the inevitable impurities is 0.3 mass% or less.

### [Brazing Sheet and Other Configurations]

The brazing sheet may also be, e.g., a 3-layer (Brazing Material/Core Material/Sacrificial Anode Material) brazing sheet in which the sacrificial anode material is provided on the other surface of the core material in response to a request from a user. Alternatively, the brazing sheet may also be, e.g., a 4-layer (Brazing Material/Intermediate Sacrificial Anode Material/Core Material/Sacrificial Anode Material) brazing sheet in which the intermediate sacrificial anode material is further provided between the core material and the brazing material. Still alternatively, the brazing sheet may also be, e.g., a 4-layer (Brazing Material/Intermediate Sacrificial Anode Material/Core Material/Brazing Material) brazing sheet in which the brazing materials are provided on both surfaces of the core material, and the intermediate sacrificial anode material is provided between the core material and the brazing material on one side of the core material. Yet alternatively, the brazing sheet may also be, e.g., a 5-layer (Brazing Material/Intermediate Sacrificial Anode Material/Core Material/Intermediate Sacrificial Anode Material/Brazing Material) brazing sheet in which the brazing materials are provided on the both surfaces of the core material, and the intermediate sacrificial anode materials are provided between the core material and the brazing materials on both sides of the core material. It may also be possible to appropriately combine the sacrificial anode material and the intermediate sacrificial anode material and thus provide another multi-layer structure. Note that, as the sacrificial anode material and the intermediate sacrificial anode material, various aluminum alloys can be used depending on required properties.

Examples of the sacrificial anode material and the intermediate sacrificial anode material include pure aluminum according to JIS 1000 series, an Al-Zn alloy containing 1.00 mass% or more and 6.00 mass% or less of Zn, an Al-Si-Zn alloy containing 0.10 mass% or more and 1.00 mass% or less of Si and 1.00 mass% or more and 6.00 mass% or less of Zn, an Al-Mg-Si-Zn alloy, an Al-Si-Mn-Zn-based alloy, an Al-Mg-Zn-based alloy, and the like.

Note that alloy numbers shown in the present specification are based on JIS H 4000: 2014 and JIS Z 3263: 2002.

### [Fluxless Brazed Structure]

A fluxless brazed structure according to the present embodiment includes the brazing sheet described above and the aluminum alloy material described above.

The brazing sheet and the aluminum alloy material are as described above.

Note that the fluxless brazed structure is specifically a brazed structure brazed with the brazing material without using a flux. Since the fluxless brazed structure results from brazing performed without using a flux, the fluxless brazed structure does not contain flux residues. In Nocolok brazing using a conventional brazing sheet for Nocolok brazing, a Nocolok flux is used. Accordingly, residues (e.g., the surplus flux, a reaction product between an oxide coating film or the like and the flux, and the like) may be deposited on a surface of a material after the brazing to exert a considerable adverse effect on a corrosion resistance of a brazed structure and surface processibility in post-processing. However, the fluxless brazed structure in the present embodiment does not include such flux residues and can therefore avoid such problems.

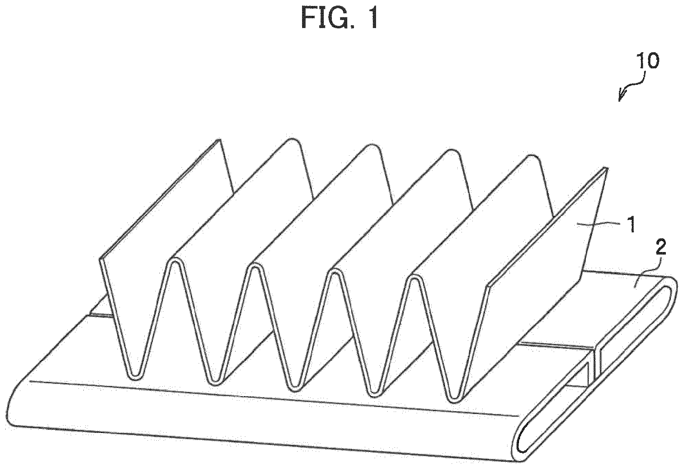

Examples of the fluxless brazed structure include a structure as illustrated in FIG. 1 in which a fin 1 obtained by working an aluminum alloy material into a corrugated shape is brazed to a tube 2 obtained by working a brazing sheet such that a brazing material surface faces outward. For example, a fluxless brazed structure 10 can be used as a member for a heat exchanger.

When the fluxless brazed structure 10 is used as a member for a heat exchanger, the tube comes into contact with cooling water. Accordingly, when the tube has a low corrosion resistance, a hole may be opened in the tube, and a fluid in the tube may leak out. In the present embodiment, a content of Mg serving as a factor which degrades the corrosion resistance of the tube is restricted. Instead, Mg for destroying an oxide coating film is added to a fin material to improve a brazability of the fluxless brazed structure 10. Specifically, in the present embodiment, the Mg content of the brazing material of the brazing sheet used as, e.g., the tube is restricted and, instead, Mg is added to an aluminum alloy material used as, e.g., the fin material.

The fluxless brazed structure can be produced by a fluxless brazing method described later.

### [Fluxless Brazing Method]

In the fluxless brazing method according to the present embodiment, the aluminum alloy material described above is brazed to the brazing sheet described above with the brazing material clad on the brazing sheet without using a flux.

The following will describe, as an example of the fluxless brazing method, a method in which the brazing sheet and the aluminum alloy material are heated in an inert gas atmosphere under predetermined heating conditions.

### (Heating Condition: Temperature Increase Rate)

When the brazing sheet and the aluminum alloy material each according to the present embodiment are heated (brazed), a temperature increase speed before a real heating temperature (a predetermined maximum reached temperature within a range of the heating temperature described later) is reached is not particularly limited. However, a temperature increase speed from 350 °C to the real heating temperature may appropriately be in a range of, e.g., 1 °C/min or more and 500 °C/min or less.

A temperature decrease speed from the real heating temperature is also not particularly limited, but may appropriately be in a range of, e.g., 5 °C/min or more and 1000 °C/min or less.

### (Heating Condition: Heating Temperature and Holding Time)

A heating temperature (brazing material melting temperature) when the brazing sheet and the aluminum alloy material each according to the present embodiment are heated is in a range of 560 °C or more and 620 °C or less, and is preferably in a range of 580 °C or more and 620 °C or less. When a holding time in the temperature range is 10 seconds or more, it is possible to reliably ensure a time required for causing a brazing phenomenon (destruction of an oxide coating film, a reduction in oxygen concentration in an atmosphere, and a flow of the molten brazing material to a joint portion).

Accordingly, the holding time in a temperature range of 560 °C or more and 620 °C or less (preferably a temperature range of 580 °C or more and 620 °C or less) is preferably 10 seconds or more.

Note that, to reliably cause the brazing phenomenon, the holding time in the temperature range of 560 °C or more and 620 °C or less (preferably the temperature range of 580 °C or more and 620 °C or less) is preferably 30 seconds or more, and more preferably 60 seconds or more. Meanwhile, an upper limit of the holding time is not particularly limited, but may appropriately be 1500 seconds or less.

### (Inert Gas Atmosphere)

An atmosphere when the brazing sheet and the aluminum alloy material each according to the present embodiment are heated (brazed) is an inert gas atmosphere which is, e.g., a nitrogen gas atmosphere, an argon gas atmosphere, a helium gas atmosphere, or a gas mixture atmosphere obtained by mixing such a plurality of gases with each other. As the inert gas atmosphere, an atmosphere in which an oxygen concentration is as low as possible is preferred. Specifically, the oxygen concentration is preferably 50 ppm or less, and more preferably 10 ppm or less.

The fluxless brazing method according to the present embodiment does not require a vacuum atmosphere, and can be implemented under an ordinary pressure (atmospheric pressure).

Note that the aluminum alloy material is normally assembled to the brazing sheet according to the present embodiment so as to come into contact with the brazing material of the brazing sheet before the heating described above is performed on the brazing sheet (before a brazing step) (assembly step). Prior to the assembly step, the brazing sheet and the aluminum alloy material may also be formed into intended shapes and structures (forming step).

The fluxless brazing method according to the present embodiment (i.e., a method of producing the fluxless brazed structure in which the aluminum alloy material is brazed to the brazing sheet) is as described above. As unspecified conditions, conventionally known conditions may be used appropriately. It will be appreciated that, as long as the effects provided by the processing described above are achieved, the conditions can be modified appropriately.

It is assumed that the fluxless brazing method according to the present embodiment is implemented in the inert gas atmosphere. However, the fluxless brazing method may also be performed in a vacuum atmosphere or a reducing gas atmosphere.

### [Method of Producing Aluminum Alloy Material]

A method of producing an aluminum alloy material is implemented as follows using a conventionally known production method.

When the aluminum alloy material is produced as a single-layer material, an aluminum alloy having a predetermined chemical composition is melted/cast and sequentially subjected to surface scalping, homogenization, hot rolling, and cold rolling, which are combined with softening treatment as necessary, to have a predetermined thickness.

When the aluminum alloy material is used as a clad material (a layer is stacked on a surface of the aluminum alloy material opposite to a surface thereof to be subjected to fluxless brazing/joining), not only a core-material aluminum alloy (aluminum alloy used in the present invention), but also a side-material alloy is melted/cast and subjected as necessary to surface scalping and homogenization to produce a core-material ingot and a side-material ingot. Then, the side-material ingot is rolled to produce a sheet material having a predetermined thickness, which is stacked on one surface of the core-material ingot to provide a clad sheet. Then, the clad sheet is subjected to hot rolling such that individual layers included therein are rolled to be compressively joined together. Subsequently, the clad sheet is subjected to cold rolling and to process annealing as necessary to provide the clad material.

Note that, even when the number of stacked layers increases, the aluminum alloy material is produced by similarly producing and stacking sheets to be added (a sacrificial anode material sheet, a brazing material sheet, and an intermediate sacrificial anode material sheet).

### Example

Next, a description will be given of an example of the present invention.

### [Production of Aluminum Alloy Material]

Aluminum alloys (F1 to F7) having chemical compositions illustrated in Table 1 were each melted/cast and sequentially subjected to surface scalping, homogenization, hot rolling, cold rolling, process annealing, and final cold rolling to have a thickness of 50 µm. Note that, in the present example, aluminum alloy materials were produced and used as fins. It can be considered that, in terms of mechanism, sheet thicknesses do not have significant effects on the produced fins.

### [Production of Blazing Sheets]

For brazing sheets (brazing target materials (B1 and B2)) shown in Table 2, respective aluminum alloys for brazing materials, for core materials, and for intermediate sacrificial anode materials were melted/cast and sequentially subjected to surface scalping and homogenization to produce brazing-material ingots, core-material ingots, and intermediate-sacrificial-anode-material ingots. The brazing-material ingots and the intermediate-sacrificial-anode-material ingots were rolled to produce sheets having predetermined thicknesses, which are stacked appropriately on the core-material ingots to provide clad sheets. Then, the clad sheets were subjected to hot rolling such that individual layers included therein were rolled to be compressively jointed together. Subsequently, the clad sheets were subjected to cold rolling, process annealing, and final cold rolling to produce the brazing sheets.

Note that, in Table 2, B1 has "Al-10Si" as the brazing material, "Al-0.3Fe" as the intermediate sacrificial anode material, and "Al-0.75Si-1.65Mn-0.50Cu-0.15Ti" as the core material, while B2 has "Al-6Si-3Zn" as the brazing material and "Al-0.85Si-1.65Mn-0.85Cu-0.15Ti" as the core material.

### [Brazability Evaluation]

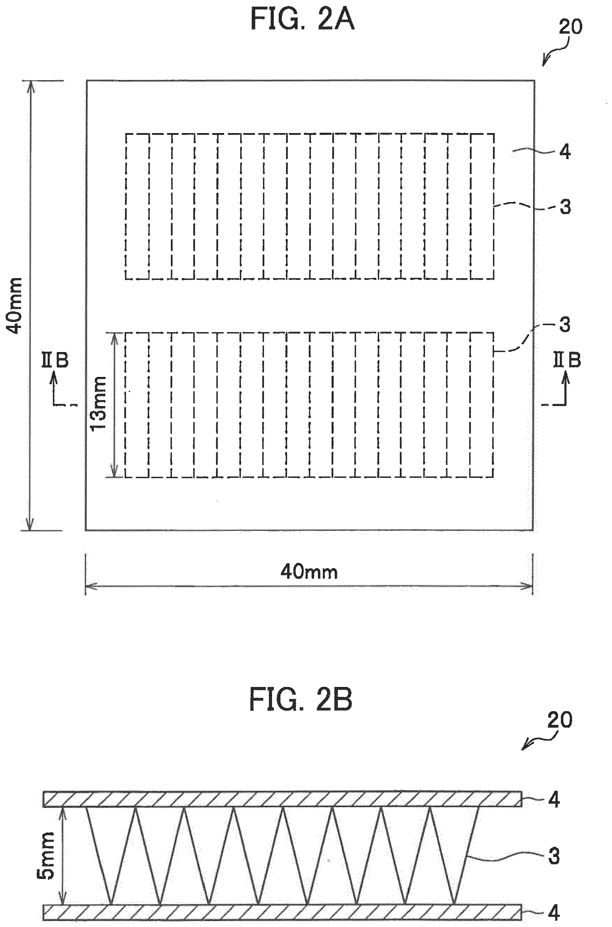

A description will be given with reference to FIGS. 2A and 2B. First, each of the aluminum alloy materials was worked into a corrugated shape having a height of 5 mm and a width of 13 mm such that one side thereof has eight peaks to provide fins 3. Meanwhile, as illustrated in FIG. 2A, each of the brazing sheets 4 was cut into 40 mm square pieces.

Next, all the test samples described above were subjected to alkali degreasing and then assembled as illustrated in FIGS. 2A and 2B. Specifically, on one of the brazing sheets 4, the two fins 3 were vertically arranged when viewed in plan view, and the other brazing sheet 4 was placed thereon. The two fins 3 were fixed to come into uniform contact with the brazing sheets 4. The test samples were thus assembled and then subjected to brazing under the following conditions. Specifically, the brazing was performed at 590 °C or more (600°C or less) for 4 minutes in a nitrogen atmosphere in which an oxygen concentration was 10 ppm or less. Thus, test pieces 20 to be subjected to brazability evaluation were produced.

After the brazing, the test pieces were decomposed, and unjoined portions of the fins were removed. Brazabilities were evaluated using, as fin joining ratios, values obtained by dividing total lengths (fin joint lengths) of joined portions of the fins by entire fin lengths (total lengths of the unjoined portions and the joined portions). The test pieces each having the fin joining ratio (fin joint length/entire fin length) of 80% or more were determined to have excellent brazabilities and be acceptable. The result of the brazability evaluation is shown in Table 3. Note that, in Table 1, a numerical value of an element content which does not satisfy the scope of the present invention is underlined, while uncontained components are indicated by "-".

**Table 1**

| Symbol | Chemical Composition (Mass%) Remainder: Al and Inevitable Impurities | | | | | | | | Alloy System |
|---|---|---|---|---|---|---|---|---|---|
| | Si | Mn | Fe | Mg | Bi | Zn | Cu | Ti | |
| F1 | 0.25 | 1.00 | 0.12 | - | - | 0.80 | 0.13 | 0.03 | |
| F2 | 0.25 | 1.00 | 0.12 | 0.30 | 0.20 | 0.80 | 0.13 | 0.03 | |
| F3 | - | 0.50 | 0.15 | 0.60 | - | 1.50 | - | - | Al-Zn-Based Alloy |
| F4 | 0.25 | 1.00 | 0.12 | 0.60 | 0.30 | 0.80 | 0.13 | 0.03 | Al-Mn-Based Alloy |
| F5 | 0.25 | 1.00 | 0.12 | 0.90 | 0.20 | 0.80 | 0.13 | 0.03 | Al-Mn-Based Alloy |
| F6 | 0.25 | 1.00 | 0.12 | 1.20 | 0.20 | 0.80 | 0.13 | 0.03 | Al-Mg-Based Alloy |
| F7 | 0.25 | 1.00 | 0.12 | 1.20 | 0.30 | 0.80 | 0.13 | 0.03 | Al-Mg-Based Alloy |

**Table 2**

| Symbol | Clad Configuration (Chemical Composition (Mass%) and Clad Thickness) *Surfaces of Underlined Brazing Materials were Subjected to Brazing Test |
|---|---|
| B1 | Al-10Si[20µm] / Al-0.3Fe[60µm] /Al-0.75Si-1.65Mn-0.50Cu-0.15Ti[120µm] |
| B2 | Al-6Si-3Zn[60µm] /Al-0.85Si-1.65Mn-0.85Cu-0.15Ti[140µm] |

**Table 3**

| No. | Aluminum Alloy Material | Brazing Sheet | Joining Ratio (%) |
|---|---|---|---|
| 1 | F1 | B1 | 0 |
| 2 | | B2 | 0 |
| 3 | F2 | B1 | 78 |
| 4 | | B2 | 23 |
| 5 | F3 | B1 | 91 |
| 6 | | B2 | 84 |
| 7 | F4 | B1 | 97 |
| 8 | F5 | B1 | 98 |
| 9 | | B2 | 82 |
| 10 | F6 | B1 | 100 |
| 11 | | B2 | 92 |
| 12 | F7 | B1 | 97 |
| 13 | | B2 | 84 |

As Shown in Table 3, each of Nos. 5 to 13 according to the example satisfied a configuration of the present invention, and was therefore determined to be acceptable in the brazability evaluation.

Meanwhile, Nos. 5, 8, 10, and 12 had Si contents of the brazing materials of the brazing sheets higher than those of Nos. 6, 9, 11, and 13, and therefore brazing therein was easier and had higher joining ratios.

Meanwhile, Nos. 1 to 4 as comparative examples did not satisfy the configuration of the present invention, and therefore had the following result.

Nos. 1 and 2 in which the aluminum alloy materials did not contain Mg had lower joining ratios and poor brazabilities.

Nos. 3 and 4 in which the aluminum alloy materials had low Mg contents had lower joining ratios and poor brazabilities.

## Claims

1. An aluminum alloy material to be brazed, to a brazing sheet in which a core material is clad with a brazing material made of an Al-Si-based alloy having a Mg content restricted to be less than 0.10 mass%, with the brazing material without using a flux, the aluminum alloy material being made of any of an Al-Mg-based alloy containing 0.40 mass% or more and 1.30 mass% or less of Mg, an Al-Mn-based alloy, and an Al-Zn-based alloy.

2. The aluminum alloy material according to claim 1, further containing 1.00 mass% or less of Bi.

3. A fluxless brazed structure comprising:
a brazing sheet in which a core material is clad with a brazing material made of an Al-Si-based alloy having a Mg content restricted to be less than 0.10 mass%; and
an aluminum alloy material made of any of an Al-Mg-based alloy containing 0.40 mass% or more and 1.30 mass% or less of Mg, an Al-Mn-based alloy, and an Al-Zn-based alloy.

4. A fluxless brazing method comprising,
brazing, to a brazing sheet in which a core material is clad with a brazing material made of an Al-Si-based alloy having a Mg content restricted to be less than 0.10 mass%, an aluminum alloy material made of any of an Al-Mg-based alloy containing 0.40 mass% or more and 1.30 mass% or less of Mg, an Al-Mn-based alloy, and an Al-Zn-based alloy with the brazing material without using a flux.
